# EUROPÄISCHE PATENTANMELDUNG

(11) **EP 0 785 040 A1**
(43) Veröffentlichungstag der Anmeldung: **23.07.1997**
(21) Anmeldenummer: 97100447.8
(22) Anmeldetag: 14.01.1997
(51) Int. Cl.: B23B 9/08, B23Q 39/04

(54) **Mehrstationen-Werkzeugmaschine**

(30) Priorität: 17.01.1996 DE 19601433
(71) Anmelder: WITZIG & FRANK TURMATIC GmbH, D-77652 Offenburg (DE)
(72) Erfinder: Walter, Heinz, 71272 Renningen (DE)
(74) Vertreter: Patentanwälte Rüger, Barthelt & Abel

(57) **Zusammenfassung**

Eine Mehrstationen-Werkzeugmaschine (1) weist in einer geschlossenen Zelle (3) einen Spindelträger (7) auf, der um eine vertikale Schaltachse (8) drehbar ist. Der Spindelträger (7) ist mit vier Werkstückspindeln (9) versehen, die bei Drehung des Spindelträgers (7) um die Schaltachse (8) umlaufen. Die Werkstückspindeln (9) sind vertikal angeordnet und tragen die Werkstücke (5) hängend. In jeder Schaltposition können die Werkstückspindeln (9) mit Spindelantrieben (13) gekuppelt werden. Zur Bearbeitung der Werkstücke (5) sind in jeder Schaltposition Bearbeitungseinrichtungen (14) vorgesehen, die das sich drehende Werkstück (5) mit ruhenden oder umlaufenden Werkzeugen bearbeiten können. Die Werkzeuge sind vorzugsweise an auf Kreuzschlitten (18) gelagerten Werkzeugrevolvern (16,17) gehalten.

## Beschreibung

Die Erfindung betrifft eine Mehrstationen-Werkzeugmaschine, die insbesondere zur spanenden Bearbeitung von Werkstücken vorgesehen ist.

Werkzeugmaschinen der genannten Art dienen der zeitsparenden Ausführung einer größeren Anzahl spanender Bearbeitungsvorgänge an einer Folge von Werkstücken, weitgehend ohne manuellen Eingriff.

Eine solche Mehrstationen-Werkzeugmaschine ist aus der DE 39 41 480 A1 bekannt. Die Werkzeugmaschine weist ein Maschinengestell auf, das als geschlossener starrer Käfig ausgebildet ist. In dem Innenraum dieses Käfigs ist, um eine vertikale Schaltachse drehbar, ein Werkstückträger vorgesehen, der an seiner Außenseite Werkstückspannvorrichtungen zur Aufnahme von Werkstücken aufweist. In dem Käfig sind mehrere Werkzeugrevolver angeordnet. Die Werkzeugrevolver weisen jeweils einen Revolverkopf auf, der um eine schräg zu der Schaltachse stehende Schwenkachse drehbar gelagert ist. Die Revolverköpfe sind jeweils so gelagert, daß sie eine Zustellbewegung zu dem betreffenden Werkstück ausführen können.

Diese Mehrstationen-Werkzeugmaschine eignet sich wenig oder nicht zur Ausbildung rotationssymmetrischer Strukturen an den Werkstücken.

Aus der DE 27 55 755 C2 ist eine Rundtakt-Werkzeugmaschine bekannt, die einen Rahmen aufweist, der einen Arbeitsraum umschließt und an dem ein in dem Arbeitsraum gehaltener Träger drehbar gelagert ist. Der Träger ist um eine vertikale Schaltachse drehbar und trägt an seinem Außenumfang Werkstückspannvorrichtungen. In radialer Richtung erstrecken sich an dem Rahmen gehaltene Werkzeugspindeln zur Bearbeitung der Werkstücke. Die Werkzeugspindeln liegen in einer gemeinsamen Ebene mit den Werkstückspannvorrichtungen.

Die Ausbildung und Bearbeitung gekrümmter Außenflächen von Werkstücken, insbesondere von Außenflächen mit zu einer Werkstücksymmetrieachse konzentrischen Krümmung, ist mit dieser Werkzeugmaschine nur schwer oder nicht möglich.

Davon ausgehend ist es Aufgabe der Erfindung, eine Werkzeugmaschine zu schaffen, die die Erzeugung von gekrümmten Konturen an im Rundtakt zu bearbeitenden Werkstücken und darüber hinaus möglichst vielseitige Bearbeitungsmöglichkeiten gestattet.

Eine weitere Aufgabe der Erfindung ist es, eine Werkzeugmaschine so zu gestalten, daß auch langspanende Werkstoffe verarbeitet werden können, wobei eine gute Späneabfuhr sichergestellt sein soll.

Darüber hinaus soll die Bearbeitung der Werkstücke mit möglichst hoher Präzision erfolgen.

Diese Aufgabe wird durch eine Mehrstationen-Werkzeugmaschine mit den Merkmalen des Patentanspruches 1 gelöst.

Die geschlossene Zelle, die an ihrer Oberseite zugleich die Gruppe ortsfester Spindelantriebe und den Träger mit den Werkstückspindeln hält, ermöglicht einen kompakten Aufbau und eine hohe Steifigkeit der gesamten Werkzeugmaschine. Dies kommt der Bearbeitungsgenauigkeit der Werkstücke zugute.

Der von der Zelle umschlossene Bearbeitungsraum ist nach außen hin so weit geschlossen, daß bei der Bearbeitung entstehende Späne, Dämpfe und Kühlschmiermittelspritzer eingeschlossen und somit von der Umgebung ferngehalten werden.

Die hängend angeordneten Werkstückspindeln transferieren bei Drehung des Trägers von Arbeitsstation zu Arbeitsstation. Die Werkstückspindeln sind dabei in jeder Arbeitsstation mit einem Spindelantrieb kuppelbar und können über diesen in Drehung versetzt werden. Das in dem Futter unterhalb der Werkstückspindel hängende Werkstück kann damit um seine Längsachse gedreht werden, wenn es mit den ruhenden oder umlaufenden Werkzeugen der jeweiligen Arbeitsstation in Eingriff gebracht wird. Dadurch ist die Ausbildung und Bearbeitung rotationssymmetrischer Flächen oder Flächenbereiche an dem betreffenden Werkstück möglich.

Durch die wahlweise schaltbaren Kupplungsmittel werden die um die Schaltachse umlaufenden Werkstückspindeln entsprechend der erforderlichen Arbeitsfolge mit den Abtrieben der ortsfesten Spindelantriebe gekuppelt. Diese Trennung von Spindelantrieb und Werkstückspindel reduziert das Gewicht der mit dem Träger verbundenen Teile. Die Spindelantriebe sind ortsfest und von der in sich steif ausgelegten Zelle getragen. Elektrische Zuleitungen zu den Spindelantrieben sind ortsfest. Es entfallen elektrische Zuleitungen zu dem Träger, die ansonsten über Schleifringe o.ä. zu führen wären.

Es wird außerdem kein Platz für die Spindelantriebe an dem Träger benötigt. Darüber hinaus sind die Spindelantriebe außerhalb des Arbeitsraumes angeordnet.

Die Werkstückspindeln sind zueinander parallel an den Armen eines sternförmigen Trägers so angeordnet, daß sie einen zu der Schaltachse konzentrischen Kreis definieren. Bei entsprechender Anordnung der ortsfesten Spindelantriebe stellt dies sicher, daß in jeder Schaltposition des Trägers jeweils ein Spindelantrieb mit einer Werkstückspindel gekuppelt werden kann.

Die hängende Anordnung der Werkstücke während der Bearbeitung begünstigt den Spänefall. Selbst bei Werkstücken aus langspanendem Material ist die Späneabfuhr sichergestellt. Späne fallen unter ihrem Eigengewicht nach unten, ohne sich um Werkstück oder Werkzeuge zu wickeln.

Es kann eine Ein- und Ausschleusestation vorgesehen sein, wobei der Spindelantrieb an dieser Station gegebenenfalls entfällt. Die Ein- und Ausschleusestation dient der manuellen oder maschinellen Entnahme von bearbeiteten Werkstücken aus dem in der betreffenden Station befindlichen Spannfutter und dem Einsetzen von Rohlingen in dieses. Sie kann zusätzlich mit Bearbeitungseinheiten ausgestattet sein.

Die Kupplungsmittel sind vorzugsweise formschlüssige Kupplungen wie bspw. Klauenkupplungen oder dergleichen. Diese übertragen relativ hohe Drehmomente und Leistungen bei kleinem Bauvolumen und bei geringen Schaltkräften. Bedarfsweise können auch reibschlüssige Kupplungen vorgesehen werden, die auch ein Kuppeln von Werkstückspindel und Spindelantrieb gestatten, wenn diese nichtsynchron drehen oder nicht im Stillstand befindlich sind. Synchronisierte formschlüssige Schaltkupplungen sind möglich.

Bremseinrichtungen, die mit den Spindelantrieben oder den Werkstückspindeln verbunden sind, gestatten ein gezieltes Stillsetzen der Werkstückspindeln vor dem Trennen der Kupplungsmittel und dem Transferieren der Werkstückspindeln.

Um eine flexible Bearbeitung der Werkstücke zu ermöglichen, ist es vorteilhaft, wenn bei jeder Arbeitsstation jeweils wenigstens eine Werkzeugposition mit zwei Verstellachsen vorgesehen ist. Die beiden Verstellachsen können durch einen Kreuzschlitten realisiert werden, der mit entsprechenden Stellantrieben versehen ist. Vorzugsweise umfaßt die Werkzeugposition einen Werkzeugrevolver, der mehrere Werkzeuge trägt. Diese können bedarfsweise ruhend an dem Werkzeugrevolver gelagert sein. Jedoch können die Werkzeuge auch in gesonderten, an dem Werkzeugrevolver vorgesehenen Spindeln drehbar gelagert und angetrieben sein. Sowohl mehrere gleiche als auch unterschiedliche Werkzeuge an einem Revolver sind möglich.

Jede Arbeitsstation weist vorzugsweise zwei Bearbeitungseinheiten (Werkzeugpositionen) auf, die jeweils einen Kreuztisch und einen Werkzeugrevolver enthalten.

Zusätzlich können zwischen oder anstelle von Arbeitsstationen Wendestationen vorgesehen sein, die Werkstücke aus den Spannfuttern entnehmen, diese wenden und dem Spannfutter in umgekehrter Position wieder zuführen. Damit ist eine allseitige Bearbeitung von Werkstücken möglich.

Eine konstruktive Maßnahme zur Erhöhung der Bearbeitungsgenauigkeit der Mehrstationen-Werkzeugmaschine ist die Ausbildung der Zelle als einstückig geschweißter Rahmen. Dieser ist besonders steif und nimmt alle bei der Bearbeitung auftretenden Kräfte ohne nennenswerte Deformation auf, was die Basis für eine hohe Bearbeitungsgenauigkeit bildet.

Weist die Zelle bei den Arbeitsstationen Zugangsfenster auf, sind ein manueller Werkzeugwechsel oder anderweitige Wartungsarbeiten problemlos möglich.

In der Zeichnung sind Ausführungsbeispiele der Erfindung dargestellt. Es zeigen:
- Fig. 1: eine Mehrstationen-Werkzeugmaschine in einer schematisierten Draufsicht, in teilweise geschnittener Darstellung,
- Fig. 2: die Mehrstationen-Werkzeugmaschine nach Fig. 1 in einer schematisierten Seitenansicht, geschnitten entlang der Linie II-II,
- Fig. 3: die Mehrstationen-Werkzeugmaschine nach den Fig. 1 und 2, in einer ausschnittsweisen Schnittdarstellung, geschnitten entlang der Linie III-III in Fig. 1,
- Fig. 4: eine andere Ausführungsform einer Mehrstationen-Werkzeugmaschine in einer schematisierten und teilweise geschnittenen Draufsicht,
- Fig. 5: die Mehrstationen-Werkzeugmaschine nach Fig. 4 in einer schematisierten Schnittdarstellung, geschnitten entlang der Linie V-V in Fig. 4, und
- Fig. 6: die Mehrstationen-Werkzeugmaschine nach Fig. 4, geschnitten entlang der Linie VI-VI in Fig. 4.

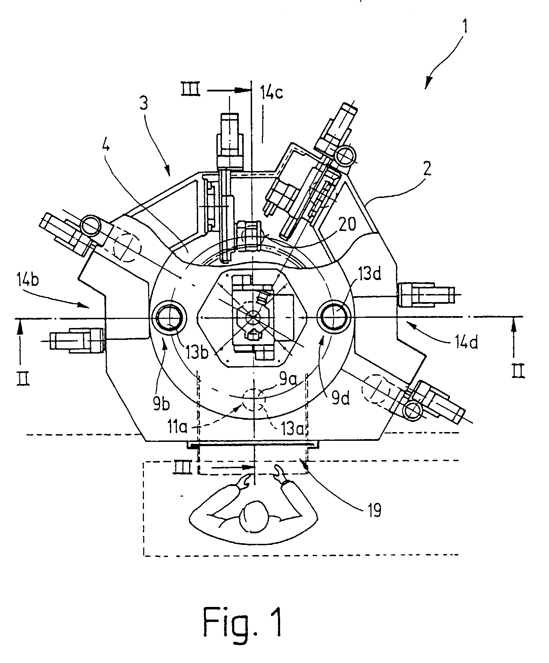

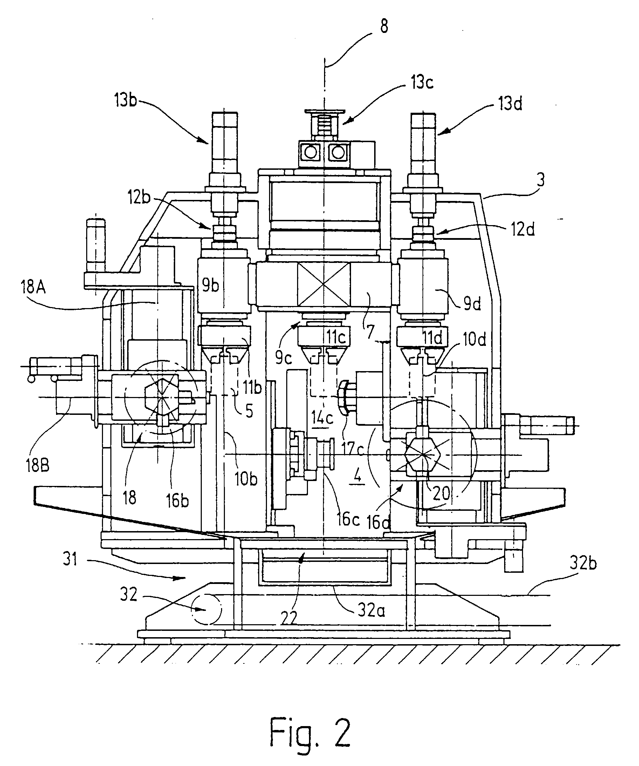

Die aus Fig. 1 ersichtliche Werkzeugmaschine 1 ist als Rundtakt- oder Mehrstationen-Werkzeugmaschine ausgebildet. Sie weist einen als einstückige Schweißkonstruktion ausgebildeten Rahmen 2 auf, der eine steife, in sich geschlossene Zelle 3 bildet. Die Zelle 3 umschließt einen Innenraum 4, der weitgehend von der Umgebung getrennt ist und in dem bspw. aus Fig. 2 ersichtliche, symbolisch angedeutete Werkstücke 5 spanend bearbeitet werden. Die Zelle 3 ist als einstückige Schweißkonstruktion ausgebildet, die einen verwindungs- und biegesteifen Käfig bildet, von dem alle anfallenden Kräfte ohne die Bearbeitungsgenauigkeit beeinträchtigende Verbiegungen aufgenommen werden.

Die Zelle 3 ist mittels eines Zentralfußes 31 auf einem Boden aufgestellt. Der Zentralfuß 31 ist mit der Zelle vorzugsweise einstückig verschweißt und kann Mittel 32 zur Späneabfuhr enthalten. Die Mittel zur Späneabfuhr können in eine Spänerutsche 32a und einen Bandförderer 32b unterteilt sein. Der Zentralfuß 31 ermöglicht eine stabile Aufstellung der Werkzeugmaschine mit geringem Justageaufwand und geringen in die Zelle 3 eingeleiteten Spannungen.

An der Oberseite der Zelle 3 ist ein Spindelträger 7 um eine vertikale Schaltachse 8 drehbar gelagert. Der Spindelträger 7 ist dazu mit einer Drehvorrichtung versehen, die den Spindelträger 7 in 90°-Schritten und bedarfsweise in kleineren Schritten drehen und arretieren kann. Zur Arretierung des Spindelträgers 7 in ausgewählten Schaltpositionen dient ein mit dem Spindelträger 7 verbundener Zahnkranz, der mit einem ortsfesten, an der Zelle 3 gehaltenen Zahnkranz in und außer Eingriff bringbar ist.

Der Spindelträger 7 trägt an seinem Außenumfang insgesamt vier Werkstückspindeln 9a bis 9d. Jede Werkstückspindel 9 weist eine drehbar gelagerte Welle auf, deren Drehachse 10 (a, b, c, d) parallel zu der Schaltachse 8 ausgerichtet ist. An ihrer jeweiligen Unterseite trägt jede Welle ein Spannfutter 11a, 11b, 11c, 11d zur Aufnahme der Werkstücke 5. An ihrer jeweiligen Oberseite ist jede Welle jeweils mit einer Kupplungshälfte einer Klauenkupplung 12a, 12b, 12c, 12d verbunden, die als unsynchronisierte Schaltkupplungen zur zeitweiligen Verbindung der jeweiligen Welle mit Spindelantrieben 13b, 13c, 13d dienen. Die Spindelantriebe 13 sind ortsfest an der Oberseite der Zelle 3 angeordnet. An ihren Abtrieben tragen sie untereinander gleich ausgebildete Kupplungshälften der Klauenkupplungen 12a bis 12d.

Die Spindelantriebe 13 sind vorzugsweise elektrische Servomotoren mit einstellbarer Drehzahl. Zusätzlich können sie mit einer Bremseinrichtung versehen sein, die ein gezieltes Stillsetzen des betreffenden Abtriebes gestattet. Die Bremseinrichtung kann sowohl an dem Spindelantrieb 13 als auch an der Werkstückspindel 9 vorgesehen sein.

Die Klauenkupplungen 12a, 12b, 12c, 12d können durch Axialbewegung ihrer Kupplungshälften ein- und ausgekuppelt werden. In Eingriffsstellung bewirken sie Kraftübertragung von den Spindelantrieben 13 auf die Werkstückspindeln 9. In ausgekuppeltem Zustand trennen sie den Abtrieb des jeweiligen Spindelantriebes 13 von der Werkstückspindel 9 derart, daß eine Drehung des Spindelträgers 7 um die Schaltachse 8 ermöglicht ist.

Die Abstände der Werkstückspindeln 9a, 9b, 9c, 9d zu der Schaltachse 8 stimmen untereinander überein. Außerdem sind die Werkstückspindeln 9a, 9b, 9c, 9d jeweils paarweise im 90°-Abstand zueinander angeordnet. Die Abstände zwischen Werkstückspindel 9 und Schaltachse 8 stimmen außerdem mit den Abständen der Abtriebe der Spindelantriebe 13 zu der Schaltachse 8 überein. Die Spindelantriebe 13 sind ebenfalls paarweise im 90°-Abstand angeordnet. Dadurch sind bei Drehung des Spindelträgers 7 in 90°-Schritten jeweils alle drei Spindelantriebe 13b, 13c, 13d mit den darunter stehenden Werkstückspindeln 9 kuppelbar.

An der Werkzeugmaschine 1 sind insgesamt drei Arbeitsstationen 14b, 14c, 14d ausgebildet. Jede Arbeitsstation 14 weist zwei Werkzeugrevolver 16, 17 auf, wie insbesondere aus Fig. 2 für die Arbeitsstation 14c anhand der Werkzeugrevolver 16c, 17c ersichtlich ist. Jeder Werkzeugrevolver trägt mehrere, im Beispiel sechs Werkzeuge, die durch Drehung des Revolvers zwischen Ruhe- und Arbeitsstellung umschaltbar sind. Jeder Revolver ist dazu um eine Drehachse 20 schaltbar, die bezüglich der Drehachse 10 des Werkstückes in Umfangsrichtung liegt. Die Werkzeuge definieren bei einer Drehung des Revolvers einen Kreis, der in den Fign. strichpunktiert dargestellt ist.

Die Werkzeugrevolver 16, 17 sind auf Kreuztischen 18 gelagert. Jeder Kreuztisch 18 weist dabei zwei mittels Elektromotoren unabhängig voneinander verstellbare Verstellachsen 18A, 18B auf. Alle Kreuztische 18 haben dabei eine Verstellachse 18A, die parallel zu der Schaltachse 8 und damit vertikal ausgerichtet ist, sowie eine weitere Verstellachse 18B, die eine Bewegung der an dem Werkzeugrevolver 16, 17 gehaltenen Werkzeuge auf das Werkstück 5 zu bzw. von diesem weg ermöglicht. Diese Bewegungsrichtung liegt, bezogen auf das in Aktivstellung befindliche Werkzeug, radial zu der von der Drehung des Werkstückes 5 definierten Drehachse. Die Verstellachsen 18A und 18B stehen rechtwinklig zueinander und rechtwinklig zu der Drehachse 20 des Revolvers.

Die Zelle 3 weist bei den Arbeitsstationen 14 entsprechende Durchgänge auf, die den in den Arbeitsstationen 14 angeordneten Bearbeitungseinheiten Zugang zu dem Innenraum 4 der Zelle 3 gewähren. Zusätzliche Zugangsöffnungen ermöglichen den manuellen Zugriff auf die Werkzeuge, die Werkzeugrevolver 16, 17 und bedarfsweise auf die Werkstücke 5.

Anstelle einer Arbeitsstation ist an einer Stop-Position der Werkzeugspindeln 9 eine Ein- und Ausschleusestation zum manuellen oder maschinellen Zu- und Abführen von Werkstücken 5 vorgesehen. In der Ein- und Ausschleusestation 19 weist die Zelle 3 eine verschließbare Öffnung auf, über die der Innenraum 4 zugänglich ist. Unterhalb der ruhenden Werkstückspindel 9 ist ein Hubtisch 21 angeordnet, der ein Werkstück 5 aufnehmen und an das Spannfutter 11 übergeben kann. In der Ein- und Ausschleusestation erfolgt keine Werkstückbearbeitung.

Es ist jedoch auch möglich, an der Ein- und Ausschleusestation eine Arbeitsstation mit einer oder mehreren Bearbeitungseinheit(en) sowie einem Spindelantrieb 13a anzuordnen. In dieser Variante hat die Werkzeugmaschine 1 vier Arbeitsstationen 14.

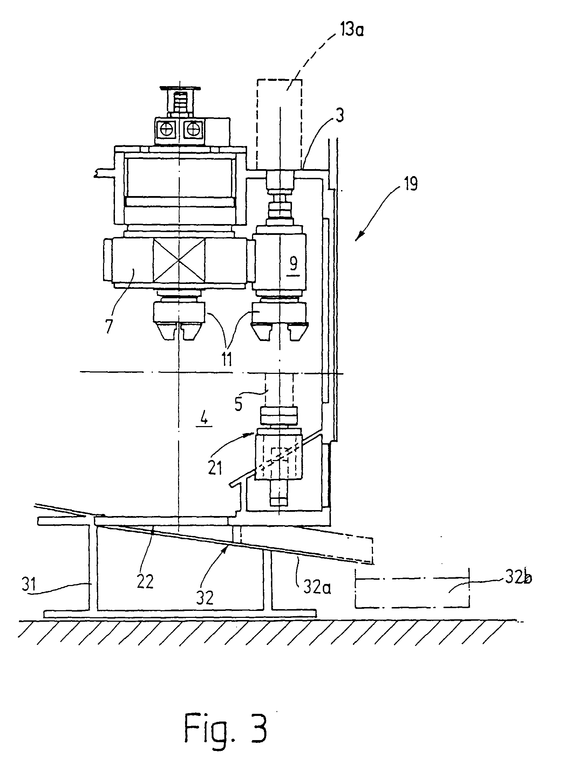

Während die Zelle allseitig geschlossen und ihre Öffnungen mit entsprechenden Türen verschließbar sind, weist sie an ihrer Unterseite, wie aus den Fig. 2 und 3 hervorgeht, eine Öffnung 22 zum Austrag der anfallenden Späne auf. An die Öffnung 22, zu der der Boden der Zelle 3 trichterartig abfällt, schließen sich die Spänerutsche 32a und der Bandförderer 32b an.

Eine nicht weiter dargestellte Steuerung steuert die Servoantriebe der Kreuztische 18, die Spindelantriebe 13, die Klauenkupplungen 12 und die Bewegung des Spindelträgers 7 um die Schaltachse 8 sowie alle weiteren zum Betrieb erforderlichen Bewegungen.

Die insoweit beschriebene Werkzeugmaschine 1 arbeitet wie folgt:

Nach Einrichtung der Werkzeuge und vollständiger Programmierung der Steuereinrichtung wird ein erstes Werkstück 5, wie in Fig. 3 dargestellt, auf den Hubtisch 21 aufgesetzt, der es in das Spannfutter 11 einsetzt. Dieses spannt, gesteuert von der Steuerungseinrichtung, automatisch, wonach der Spindelträger 7 um 90° weiterschaltet. Es werden nun die Werkstückspindeln 9 an die Spindelantriebe 13 angekuppelt und die Spindelantriebe auf ihre Solldrehzahl gebracht. Die Werkstückrevolver 16, 17 führen mit ihren Werkzeugen nun die gewünschten spanenden Bearbeitungsvorgänge an dem Werkstück 5 aus.

Bedarfsweise können durch Weiterschalten der Werkstückrevolver unterschiedliche Bearbeitungsvorgänge ausgeführt werden.

Nach Beendigung der Arbeitsvorgänge in Arbeitsstation 14b werden alle Werkstückspindeln 9 stillgesetzt und die Klauenkupplungen 12 werden ausgekuppelt. Der Spindelträger 7 wird nun um 90° weitergedreht, wobei das zu bearbeitende Werkstück nun in die Arbeitsstation 14c gelangt, wo es nach Einkuppeln der Klauenkupplung 12c weiter bearbeitet wird. Ein zwischenzeitlich in der Ein- und Ausschleusestation 19 zugeführtes weiteres Werkstück wird gleichzeitig in der Arbeitsstation 14b bearbeitet.

In dieser Weise durchlaufen die Werkstücke nacheinander die Arbeitsstationen 14b, 14c und 14d, wobei sie in jeder Arbeitsstation 14 gleichzeitig spanend bearbeitet werden. Die anfallenden Späne fallen wegen der vertikalen Anordnung der Werkstückspindeln 9 und der hängenden Anordnung der Werkstücke 5 nach unten und werden durch die Öffnung 22 abgeführt. Werkstücke aus langspanendem Material sind infolge des günstigen Spänefalls leicht bearbeitbar.

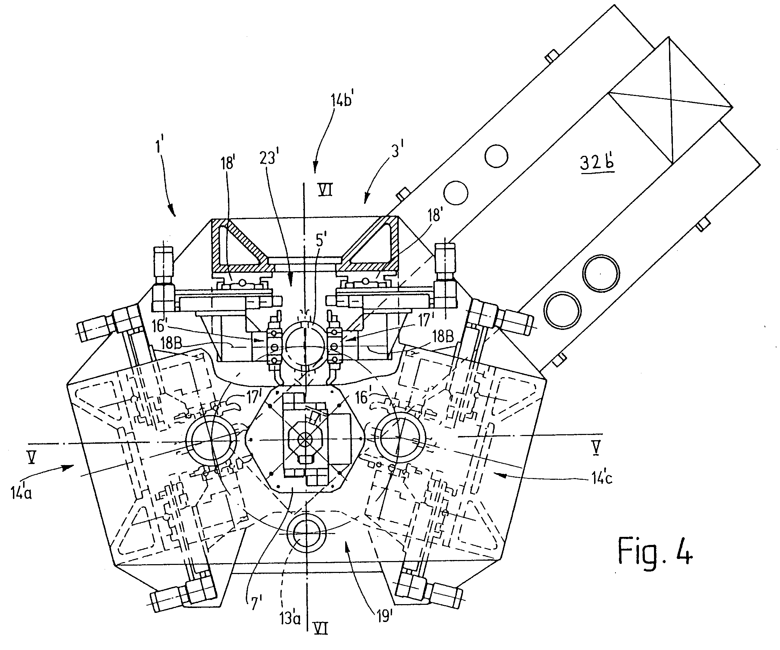

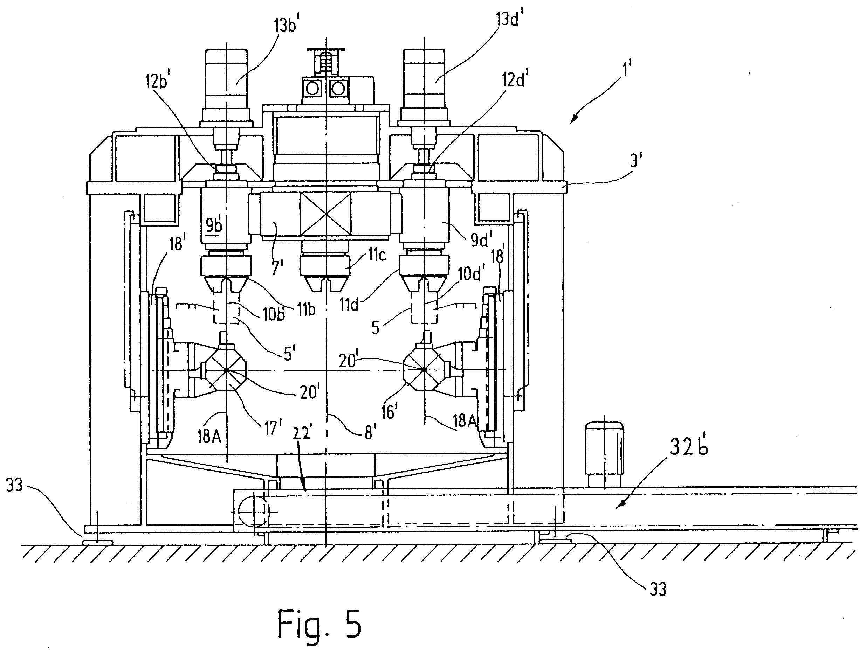

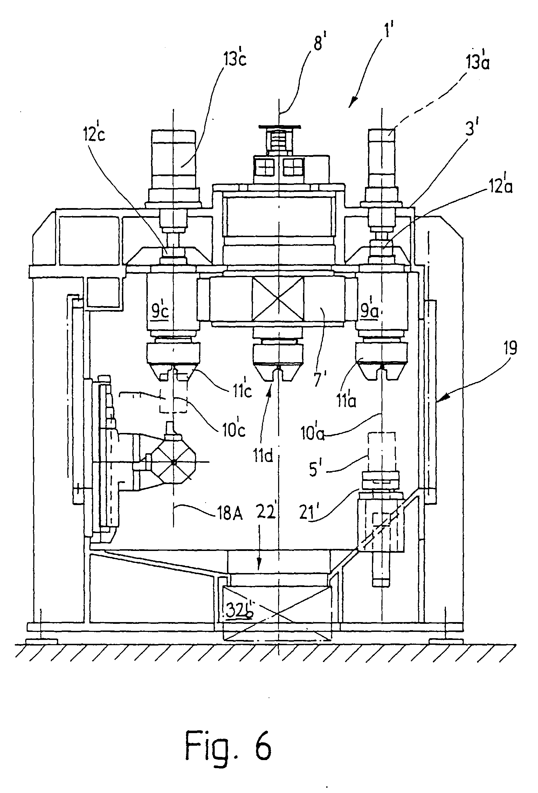

Eine etwas abgewandelte Ausführungsform der Werkzeugmaschine 1 ist in den Fig. 4, 5 und 6 veranschaulicht. Wegen der prinzipiellen Übereinstimmung sind alle Teile mit gleichen, zur Kennzeichnung mit einem Apostroph versehenen Bezugszeichen bezeichnet. Die vorstehende Erläuterung des Aufbaus und der Funktion gilt sinngemäß für die Werkzeugmaschine 1'.

Anstelle des Zentralfußes 31 ist die Zelle 3' mit justierbaren, außen angeordneten Einzelfüßen 33 versehen.

Ein wesentlicher Unterschied liegt in der Anordnung der die Werkzeugrevolver 16, 17 tragenden Kreuztische 18. Während die horizontale Verstellachse 18B der Kreuztische 18 bei der Werkzeugmaschine 1 nicht nur radial zu dem Werkstück 5, sondern zusätzlich ungefähr radial zu der Zelle 3 ausgerichtet ist, liegt die horizontale Verstellachse 18B der Kreuztische 18 bei der Werkzeugmaschine 1' im wesentlichen in Umfangsrichtung zu der Zelle 3'. Dies hat den Vorteil, daß die radial zu dem Werkstück 5' bewegbaren Werkzeugrevolver 16', 17' wie gehabt radial, jedoch an einander gegenüber liegenden Seiten des Werkstückes 5 angreifen. Während die Verstellachsen 18A' und 18B' rechtwinklig zueinander ausgerichtet sind, ist die horizontale Verstellachse 18B' parallel zu der Drehachse 20' des Revolvers oder stimmt mit dieser überein.

Die Werkzeugrevolver 16', 17' sind dadurch räumlich getrennt und können an dem Werkstück 5' angreifen, ohne sich gegenseitig zu behindern. Ein weiterer Vorteil liegt in dem erleichterten manuellen Zugang zu den Werkzeugen und dem Werkstück 5' durch eine in der Zelle 3' vorgesehene Zugangsöffnung 23'. Der Zugang wird durch die Kreuztische 18' und deren Antriebe nicht behindert, wie Fig. 4 zeigt.

Eine Mehrstationen-Werkzeugmaschine 1 weist in einer geschlossenen Zelle 3 einen Spindelträger 7 auf, der um eine vertikale Schaltachse 8 drehbar ist. Der Spindelträger 7 ist mit vier Werkstückspindeln 9 versehen, die bei Drehung des Spindelträgers 7 um die Schaltachse 8 umlaufen. Die Werkstückspindeln 9 sind vertikal angeordnet und tragen die Werkstücke 5 hängend. In jeder Schaltposition können die Werkstückspindeln 9 mit Spindelantrieben 13 gekuppelt werden. Zur Bearbeitung der Werkstücke 5 sind in jeder Schaltposition Bearbeitungseinrichtungen 14 vorgesehen, die das sich drehende Werkstück 5 in jeder Station mit ruhenden oder umlaufenden Werkzeugen bearbeiten können, wobei die Bearbeitung in den Stationen gleichzeitig erfolgt. Die Werkzeuge sind vorzugsweise an auf Kreuzschlitten 18 gelagerten Werkzeugrevolvern 16, 17 gehalten.

## Patentansprüche

1. Mehrstationen-Werkzeugmaschine (1), insbesondere zur spanenden Bearbeitung von Werkstücken (5),
mit einer geschlossenen Zelle (3), die einen Bearbeitungsraum (4) zur Bearbeitung der Werkstücke (5) definiert, der von der Umgebung getrennt ist,
mit einem an der Oberseite der Zelle (3) vorgesehenen Spindelträger (7), der um eine vertikale Schaltachse (8) drehbar gelagert gezielt in unterschiedliche Drehpositionen verdrehbar ist,
mit einer Gruppe von jeweils parallel zu der Schaltachse (8) ausgerichteten Werkstückspindeln (9), die mit gleichen Abständen zu der Schaltachse (8) in gleichen Winkelabständen zueinander angeordnet sind und Spannfutter (11) zur hängenden Aufnahme der Werkstücke (5) aufweisen,
mit einer Gruppe von ortsfesten Spindelantrieben (13), deren Abtriebe an der Oberseite der Zelle (3) parallel zu der Schaltachse (8) derart angeordnet sind, daß die Werkstückspindeln (9) in unterschiedlichen Drehpositionen des Spindelträgers (7) mit den Abtrieben in Antriebsverbindung bringbar sind,
mit wahlweise schaltbaren Kupplungsmitteln (12), die zwischen den Abtrieben der Spindelantriebe (13) und den Werkstückspindeln (9) wirken und die in ausgerücktem Zustand eine Verdrehung des Spindelträgers (7) mit den von ihm getragenen Werkstückspindeln (9) ermöglichen sowie in eingerücktem Zustand den jeweiligen Spindelantrieb (13) an die ihm zugeordnete Arbeitsspindel (9) kuppeln, und
mit einer Gruppe von Bearbeitungseinrichtungen, die den Spindelantrieben (13) zugeordnet sind und die Arbeitsstationen (14) definieren.

2. Mehrstationen-Werkzeugmaschine nach Anspruch 1, dadurch gekennzeichnet, daß die Zelle (3) eine Ein- und Ausschleusestation (19) zum Zu- und Abführen der Werkstücke (5) aufweist.

3. Mehrstationen-Werkzeugmaschine nach Anspruch 2, dadurch gekennzeichnet, daß die Ein- und Ausschleusestation (19) derart eingerichtet ist, daß eine Werkstückbearbeitung bereits in der Ein- und Ausschleusestation (19) durchführbar ist.

4. Mehrstationen-Werkzeugmaschine nach Anspruch 1, dadurch gekennzeichnet, daß die Kupplungsmittel (12) formschlüssige Kupplungen sind.

5. Mehrstationen-Werkzeugmaschine nach Anspruch 1, dadurch gekennzeichnet, daß die Spindelantriebe (13) oder die Werkstückspindeln (9) jeweils mit einer Bremseinrichtung verbunden sind.

6. Mehrstationen-Werkzeugmaschine nach Anspruch 1, dadurch gekennzeichnet, daß bei jeder Arbeitsstation (14) jeweils wenigstens eine Werkzeugposition mit zwei Verstellachsen (18A, 18B) angeordnet ist.

7. Mehrstationen-Werkzeugmaschine nach Anspruch 6, dadurch gekennzeichnet, daß die Verstellachsen (18A, 18B) durch Kreuztische (18) definiert sind und daß jeder Kreuztisch (18) einen Werkzeugrevolver (16, 17) trägt.

8. Mehrstationen-Werkzeugmaschine nach Anspruch 1, dadurch gekennzeichnet, daß in der Zelle (3) wenigstens eine Wendestation zum Wenden von an den Werkzeugspindeln (9) hängenden Werkstücken (5) angeordnet ist.

9. Mehrstationen-Werkzeugmaschine nach Anspruch 1, dadurch gekennzeichnet, daß die Zelle (3) als einstückig geschweißter Rahmen ausgebildet ist.

10. Mehrstationen-Werkzeugmaschine nach Anspruch 1, dadurch gekennzeichnet, daß die Zelle (3) bei den Arbeitsstationen (14) Zugangsfenster (23') aufweist.

11. Mehrstationen-Werkzeugmaschine nach Anspruch 1, dadurch gekennzeichnet, daß sie drei Arbeitsstationen (14a, 14b, 14c), eine einzige Ein- und Ausschleusestation (19) und vier von dem Spindelträger (7) getragene Werkstückspindeln (9) aufweist, die von der Ein- und Ausschleusestation (19) ausgehend nacheinander durch die Arbeitsstationen (14a, 14b, 14c) transferierbar sind.
